# EUROPÄISCHE PATENTSCHRIFT

(11) **EP 2 691 066 B1**
(45) Veröffentlichungstag und Bekanntmachung des Hinweises auf die Patenterteilung: **10.02.2016**
(21) Anmeldenummer: 12712054.1
(22) Anmeldetag: 22.03.2012
(51) Int. Cl.: A61J 11/00

(54) **SAUGNIPPELEINHEIT**
TEAT UNIT
UNITÉ À TÉTINE

(30) Priorität: 29.03.2011 CH 571112011
(43) Veröffentlichungstag der Anmeldung: 05.02.2014
(73) Patentinhaber: Medela Holding AG, 6340 Baar (CH)
(72) Erfinder: FISCHER, René, 8057 Zürich (CH); FURRER, Etienne, 6300 Zug (CH); EMMENEGGER, Bernhard, 6006 Luzern (CH)
(74) Vertreter: Clerc, Natalia
(86) Internationale Anmeldenummer: PCT/CH2012/000067
(87) Internationale Veröffentlichungsnummer: WO 2012/129714

(56) Entgegenhaltungen:
- EP-A1- 1 779 833
- WO-A1-2010/046812
- CH-A1- 698 956

## Beschreibung

### TECHNISCHES GEBIET

Die vorliegende Erfindung betrifft eine Saugnippeleinheit gemäss Oberbegriff des Patentanspruchs 1.

### STAND DER TECHNIK

Die klassische Saugnippeleinheit weist einen flexiblen Saugnippel und einen steifen Ring mit einem Innengewinde auf. Der Saugnippel durchdringt den Ring und liegt mit einem Flansch an diesem innenseitig an. Der Ring lässt sich mit dem so montierten Saugnippel auf einen Flaschenhals aufschrauben.

In US 5 553 726 ist in einen derartigen Saugnippel zusätzlich ein Rückschlagventil eingesteckt, um in Saugpausen des Babys ein Nachtropfen zu vermeiden. In US 5 791 503 wird eine Saugnippeleinheit mit Saugnippel und Gewindering vorgeschlagen, welche zusätzlich relativ zueinander verdrehbare Platten mit Öffnungen aufweist. Dadurch kann in Saugpausen des Babys Luft in die Flasche eingelassen werden.

Aus DE 2 219 909 und WO 86/06273 sind ferner einstückige Saugnippeleinheiten bekannt, bei welchen jeweils ein weicher Saugnippel an einen starren Gewindering angeformt ist.

In US 1 605 427 ist ein einstückiger Saugnippel ohne weitere Befestigungsmittel über einen Hals einer Flasche gestülpt.

WO 03/013419 zeigt einen zweiteiligen Saugnippel mit einem Rückschlagventil und einen Gewindering zur Befestigung des Saugnippels auf der Babyflasche.

US 2004/0035815 offenbart eine Trinktasse mit Saugnippel für Kleinkinder. Der Saugnippel und ein Ventilelement sind mittels eines Gewinderings in einem Deckel der Tasse gehalten.

WO 99/22693 offenbart eine relativ kompliziert aufgebaute Saugnippeleinheit, welche ein natürliches Saugen ermöglichen soll. Diese Einheit weist einen Gewindering und einen zweiteiligen Saugkörper auf. Der Gewindering wird mit seinem Innengewinde auf ein Adapterteil mit Innen- und Aussengewinde geschraubt, welches mit seinem Innengewinde auf einem Hals einer Babyflasche befestigt ist.

WO 2007/137440 beschreibt eine Saugnippeleinheit mit einem ein- oder zweiteiligen Saugnippel und einem formstabilen Aufnahmekopf zur Aufnahme des Saugnippels. Der einstückig ausgebildete Aufnahmekopf ist mit einem Gewindering versehen, so dass er auf einen Flaschenhals einer Babyflasche oder einer Trinktasse geschraubt werden kann. Der Saugnippel ist auf dem halbkugelförmigen Aufnahmekopf aufgesteckt, jedoch nicht mit dem Gewindering befestigt.

WO 2009/149576 offenbart eine Saugnippeleinheit mit einem flexiblen Saugnippel, einem im Wesentlichen starren Aufnahmekopf und einem starren Basisteil. Aufnahmekopf und Basisteil sind über eine lösbare Steckverbindung miteinander verbunden. Beim Zusammenstecken von Aufnahmekopf und Basisteil wird der Saugnippel, welcher über den Aufnahmekopf gestülpt ist, zwischen diesem und dem Basisteil eingeklemmt. Die Befestigung der Einheit auf einer Milchflasche erfolgt über ein Gewinde, welches an den Steckelementen des Aufnahmekopfes angeordnet ist. Der Aufnahmekopf bildet einen Stützkörper für den Grundkörper des Saugnippels und weist vorzugsweise aufragende weiche Stützkissen oder federnde Stützflügel auf. Diese Saugnippeleinheit hat sich insbesondere im Gebrauch bei Frühgeborenen und Babys mit Saugproblemen bewährt.

WO 2009/149575 und WO 2011/020203 offenbaren Saugnippeleinheiten mit einem seitlich angeordneten Belüftungsventil und mit einem im Milchkanal angeordneten Durchflussbegrenzer- und Rückschlagventil. Das Belüftungsventil dient zur Belüftung der Babyflasche, insbesondere während den Saugpausen des Babys. Das Rückschlagventil verhindert ein Nachfliessen von Milch aus der Saugöffnung während der Saugpausen des Babys und bei Nichtgebrauch. Zudem begrenzt es den Durchfluss durch den relativ breiten Saugkanal und die ebenfalls breite Saugöffnung.

EP 1779 833 beschreibt eine Saugnippeleinheit mit einem Gewindering zur Befestigung der Saugnippeleinheit auf einer Flasche sowie einem Saugnippel mit einer weichen Aussenschicht.

US 686 109 zeigt einen weichen Saugnippel, welcher über eine Flasche stülpbar ist und einen innen liegenden Stützkörper mit Rillen oder Rippen.

Wie oben dargelegt, sind somit die unterschiedlichsten Saugnippeleinheiten für eine Baby- oder Saugflasche bekannt. Sie sind jedoch üblicherweise für den Mehrfachgebrauch entworfen, wobei darauf geachtet wird, dass der Saugnippel einfach gereinigt werden kann.

Insbesondere im Spitalbereich, auf Reisen oder bei kranken Kindern ist jedoch eine Saugnippeleinheit wünschenswert, welche für den einmaligen Gebrauch geeignet ist, so dass sich eine aufwendige Reinigung des Saugnippels erübrigt. Diese Saugnippeleinheit sollte jedoch trotzdem ein möglichst naturgetreues Saugen ermöglichen und insbesondere die Bedürfnisse von Frühgeburten und von Babys mit schwierigem Saugverhalten erfüllen.

### DARSTELLUNG DER ERFINDUNG

Es ist deshalb eine Aufgabe der Erfindung, eine Saugnippeleinheit zu schaffen, welche für den Einmalgebrauch geeignet ist und in der Herstellung möglichst kostengünstig ist, welche jedoch trotzdem ein möglichst naturgetreues Saugen erlaubt.

Diese Aufgabe löst eine Saugnippeleinheit mit den Merkmalen des Patentanspruchs 1.

Eine Verbindung zwischen Befestigungsteil und Stützkörper kann starr sein, oder die zwei Teile können sich noch um geringe Strecken relativ zueinander bewegen. Die Verbindung ist fest und nicht zerstörungsfrei lösbar, d.h. wird die Verbindung gelöst, so kann sie nicht wieder erstellt werden.

Diese Saugnippeleinheit ist einfach aufgebaut und besteht aus relativ wenigen Komponenten. Sie lässt sich in vielen Ausführungsformen einstückig herstellen, beispielsweise in einem Zweikomponenten-Spritzgussverfahren. Dies reduziert die Herstellungskosten erheblich. Trotzdem simuliert sie dank der durch den Stützkörper gebildeten Mundabstützung und den in dieser Mundabstützung gebildeten weicheren Zonen die menschliche Mutterbrust und ermöglicht so ein möglichst natürliches Saugen. Diese Saugnippeleinheit ist insbesondere für den Einmalgebrauch geeignet, insbesondere für Frühgeborene.

Vorteilhaft ist ferner, dass sie nicht vor Gebrauch zusammengesteckt werden muss, sondern sofort einsatzbereit ist. Sie muss lediglich auf einen Getränkebehälter aufgeschraubt werden.

Die Ausnehmungen im Stützkörper sind vorzugsweise durchgehende Löcher. Sie können jedoch beispielsweise auch Vertiefungen sein. Dieser Stützkörper lässt sich sehr kostengünstig herstellen.

Vorzugsweise ist der Stützkörper und/oder das Befestigungsteil formstabil bzw. steif oder starr ausgebildet.

Ein weiterer Vorteil ist, dass der Saugnippel relativ dünn ausgebildet sein kann und insbesondere im Bereich des Stützkörpers nicht selbsttragend ausgebildet sein muss. Vorzugsweise umgibt der Saugnippel den Stützkörper vollständig. Typische Dicken des Saugnippels liegen im Bereich von 0.3 bis 5 mm, insbesondere 0.5 mm. Typische Dicken des Stützkörpers betragen 0.3 bis 5 mm, insbesondere 0.9 mm. Diese dünne Ausgestaltung, insbesondere diejenige des mit dem teureren Material ausgebildeten Saugnippels, reduziert die Herstellungskosten.

Der Saugnippel weist einen domförmigen Grundkörper auf, welcher in einem Mundstück endet. Das Mundstück bildet den Saugkanal und ist vorzugsweise selbsttragend ausgebildet, d.h. es ist nicht auf dem Stützkörper abgestützt bzw. auf diesem aufgespritzt. Das Mundstück überragt den Stützkörper.

Vorzugsweise weist der Saugnippel im Bereich der Ausnehmungen Verdickungen auf, welche in diese hineinragen. Dadurch ist insbesondere verhindert, dass sich die relativ dünne Saugnippelwand an den Kanten der Ausnehmungen reibt und reisst. Zudem wird diese Zone weicher ausgebildet. Es ist auch möglich, weitere Zonen auf der Mundabstützung auszubilden, insbesondere durch Verdickungen des Saugnippels in weiteren Bereichen.

Die Ausnehmungen sind vorzugsweise gleichmässig verteilt über die Oberfläche des Stützkörpers angeordnet. Sie können sich auf unterschiedlicher Höhe in Bezug auf die Längsmittelachse der Saugnippeleinheit befinden. Vorzugsweise befinden sie sich jedoch alle auf gleicher Höhe.

Vorzugsweise sind vier bis sieben, insbesondere genau fünf derartiger Ausnehmungen vorhanden. Sie sind vorzugsweise oval ausgebildet, wobei ihre Längsachse vorzugsweise entlang einer Mantellinie des Stützkörpers von oben nach unten verläuft. Die Ausnehmungen erstrecken sich vorzugsweise annähernd bis zu einem Bereich, in welchem die Mundabstützung in ein Mundstück des Saugnippels übergeht. Diese Ausgestaltung der Ausnehmungen ermöglicht eine Angleichung an die menschliche Mutterbrust.

Vorzugsweise ist der Saugnippel fest und insbesondere nicht zerstörungsfrei lösbar mit den zwei anderen Teilen verbunden. Insbesondere ist er auf den Stützkörper und/oder das Befestigungsteil aufgespritzt bzw. im Zweikomponenten-Spritzgussverfahren mit diesen hergestellt. Vorzugsweise sind der Saugnippel, der Stützkörper und das Befestigungsteil gemeinsam in einem Zweikomponenten-Spritzgussverfahren hergestellt, wobei der Saugnippel vorzugsweise eine geringere Shore A Härte aufweist als der Stützkörper und das Befestigungsteil.

Der Stützkörper und das Befestigungsteil bestehen vorzugsweise aus Polypropylen (PP), einem Polyamid oder einem anderen thermoplastischen Kunststoff. Sie sind beide vorzugsweise formstabil bzw. starr oder steif ausgebildet. Der flexible und weiche Saugnippel besteht vorzugsweise aus Silikon, einem Kunststoff auf Silikonbasis, Kautschuk, einem thermoplastischen Elastomer (TPE) oder einem anderen weichen thermoplastischen Kunststoff.

In einer bevorzugten Ausführungsform verbindet der Saugnippel den Stützkörper und das Befestigungsteil mittelbar miteinander. Der Saugnippel umgibt den Stützkörper teilweise oder vorzugsweise vollständig. Vorzugsweise ist der Saugnippel an einem oberen Rand des Befestigungsteils befestigt, insbesondere ist er dort ebenfalls angespritzt.

In einer anderen Ausführungsform sind der Stützkörper und das Befestigungsteil gemeinsam einstückig ausgebildet und somit unmittelbar miteinander verbunden. Auch in diesem Fall ist der Saugnippel mindestens teilweise über den Stützkörper aufgespritzt. Vorzugsweise sind im Verbindungsbereich zwischen Stützkörper und Befestigungsteil durchgehende Öffnungen vorhanden, so dass der Saugnippel in einen Flansch übergeht, welcher sich auf der Innenseite des Befestigungsteils befindet.

Das Mundstück des Saugnippels ist vorzugsweise langgezogen ausgebildet. Vorzugsweise weist es die Form eines Hohlzylinders oder eines Kegelstumpfes mit schwach geneigten Flanken auf. Der Saugkanal innerhalb des Mundstücks ist vorzugsweise mit annähernd gleichbleibendem Durchmesser ausgebildet, so dass auch die Saugöffnung einen relativ grossen Durchmesser aufweist und nicht als wesentlicher Durchflussbegrenzer wirkt. Auch diese Ausbildung optimiert das Saugverhalten, insbesondere wenn im Bereich des Übergangs von der Mundabstützung zum Mundstück ein Durchflussbegrenzer angeordnet ist.

In einer bevorzugten Ausführungsform ist ein Rückschlagventil vorhanden, um ein Nachtropfen der Saugeinheit während der Saugpausen und ein Tropfen bei Nichtgebrauch zu vermeiden. Vorzugsweise dient es gleichzeitig als Durchflussbegrenzer für den Durchfluss aus dem Mundstück.

Vorzugsweise ist das Rückschlagventil teilweise durch den Saugnippel selber gebildet. Vorzugsweise ist hierfür im Saugnippel eine Ventilmembran angeformt. Im Stützkörper ist ein zugehöriger Ventilsitz angeordnet. Der Stützkörper kann selber mit einem Ventilsitz versehen sein. Vorzugsweise ist hierfür jedoch ein Einsatzelement vorgesehen, welches im Stützkörper befestigbar, beispielsweise einklickbar, ist. Eine umgekehrte Anordnung von Ventilsitz und Membran ist insbesondere auch möglich.

In einer bevorzugten Ausführungsform ist im Stützkörper ein formstabiles Einsatzelement mit mindestens einer Durchgangsöffnung angeordnet, wobei die Durchgangsöffnung eine Verbindung zwischen einem Innenraum des Getränkebehälters zur Saugöffnung bildet.

In einer anderen bevorzugten Ausführungsform ist der Ventilsitz ein Einsatzelement in Form einer Platte, welche im Stützkörper gehalten ist. Die Platte kann geschlossen ausgebildet sein, oder sie kann mit Durchgangsöffnungen versehen sein.

Die einstückige Ausbildung des Saugnippels mit dem Rückschlagventilteil, insbesondere der Membran, vereinfacht den Aufbau der Einheit und reduziert die Einzelteile der Saugnippeleinheit. Dadurch sind wiederum die Herstellungskosten minimiert.

Ein Saugnippel zur Befestigung auf einem Getränkebehälter, mit einem Grundkörper und einem Mundstück, wobei das Mundstück einen in seinem Innern verlaufenden Saugkanal aufweist, welcher am freien Ende des Mundstücks in einer Saugöffnung endet, durch welche Flüssigkeit vom Getränkebehälter gesaugt werden kann, wobei an dem der Saugöffnung fernen Ende des Saugkanals eine Membran mit einer Durchflussöffnung einstückig an diesen angeformt ist, lässt sich auch in anderen Saugnippeleinheiten verwenden. Er lässt sich insbesondere mit Saugnippeleinheiten verwenden, welche nicht über miteinander fest verbundene Stützkörper und Befestigungsteilen und insbesondere nicht über die oben genannten weicheren Zonen verfügen. Diese Anordnung ermöglicht die Herstellung von relativ kostengünstigen, relativ wenige Einzelteile aufweisende Saugnippeleinheiten, welche trotzdem die Vorteile eines Durchflussbegrenzers und Rückschlagventils einsetzen.

Das Befestigungsteil ist vorzugsweise im Wesentlichen ein Gewindering. Vorzugsweise weist es ein Innengewinde auf, welches auf ein Aussengewinde des Getränkebehälters aufschraubbar ist. Der obere, dem Behälter abgewandte Bereich des Befestigungsteils ist insbesondere zur unlösbaren unmittelbaren Verbindung mit dem Stützkörper ausgebildet. Erfolgt die Verbindung über den Saugnippel, so ist eine geeignete Befestigungsfläche bzw. Anspritzfläche für den Saugnippel vorhanden. Erfolgt die Verbindung direkt und unmittelbar, so ist ein geeigneter Übergangbereich bzw. eine geeignete Verbindungsfläche zum bzw. mit dem Stützkörper vorhanden.

Weitere bevorzugte Ausruhrungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: einen Längsschnitt durch eine erfindungsgemässe Saugnippeleinheit mit geschlossenem Ventil in einer ersten Ausführungsform;
- Figur 2: die Saugnippeleinheit gemäss Figur 1 mit geöffnetem Ventil;
- Figur 3: eine Seitenansicht eines durchsichtigen Saugnippels und eines Stützkörpers gemäss der ersten Ausführungsform;
- Figur 4: eine Seitenansicht des Stützkörpers und eines Befestigungsteils gemäss dem ersten Ausführungsbeispiel;
- Figur 5: eine Seitenansicht eines Einsatzelements gemäss dem ersten Ausführungsbeispiel;
- Figur 6: eine perspektivische Darstellung der Saugnippeleinheit gemäss Figur 1;
- Figur 7: eine perspektivische Darstellung der Saugnippeleinheit ohne Saugnippel gemäss Figur 1;
- Figur 8: einen Längsschnitt durch eine erfindungsgemässe Saugnippeleinheit mit geschlossenem Ventil in einer zweiten Ausführungsform;
- Figur 9: die Saugnippeleinheit gemäss Figur 8 mit geöffnetem Ventil;
- Figur 10: eine perspektivische Darstellung der Saugnippeleinheit gemäss Figur 8 mit einem durchsichtigen Saugnippel;
- Figur 11a: eine perspektivische Darstellung der Saugnippeleinheit gemäss Figur 8;
- Figur 11b: eine perspektivische Darstellung eines Einsatzelements gemäss Figur 8;
- Figur 12: eine perspektivische Explosionsdarstellung einer erfindungsgemässen Saugnippeleinheit mit einem Einsatzelement und einem durchsichtigen Saugnippel gemäss einer dritten Ausführungsform;
- Figur 13: einen Längsschnitt durch die Saugnippeleinheit gemäss Figur 12 mit geschlossenem Ventil;
- Figur 14: die Saugnippeleinheit gemäss Figur 13 mit geöffnetem Ventil;
- Figur 15: eine vergrösserte Darstellung eines Teils der Saugnippeleinheit gemäss Figur 14 im Bereich eines Belüftungsventils und
- Figur 16: eine vergrösserte Darstellung eines Teils der Saugnippeleinheit gemäss Figur 15.

Gleiche Teile sind mit gleichen Bezugszeichen versehen.

### BESCHREIBUNG BEVORZUGTER AUSFÜHRUNGSFORMEN

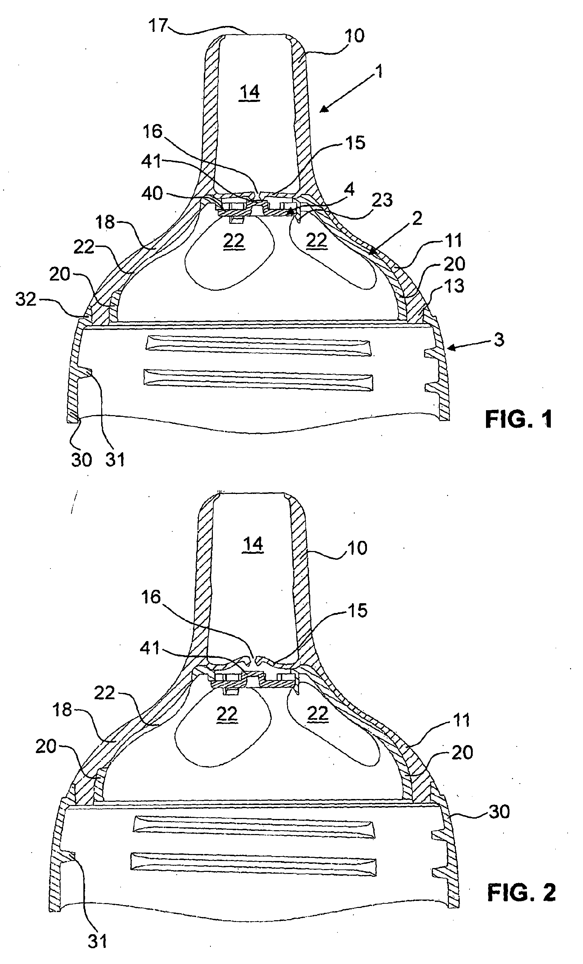

In den Figuren 1 bis 7 ist ein erstes Ausführungsbeispiel einer erfindungsgemässen Saugnippeleinheit dargestellt. Sie weist einen Saugnippel 1, einen Stützkörper 2 und ein Befestigungsteil 3 auf.

Der Stützkörper 2 und das Befestigungsteil 3 sind starr oder steif und/oder formstabil ausgebildet. Sie bestehen vorzugsweise aus Polypropylen (PP), einem Polyamid oder einem anderen thermoplastischen Kunststoff. Der Saugnippel 1 ist flexibel und weich ausgebildet und besteht vorzugsweise aus Silikon, einem Kunststoff auf Silikonbasis, Kautschuk, einem thermoplastischen Elastomer (TPE) oder einem anderen thermoplastischen Kunststoff.

Der Stützkörper 2 und das Befestigungsteil 3 sind zwei voneinander unabhängige Teile, welche durch den Saugnippel 1 fest miteinander verbunden sind. Sie sind nicht zerstörungsfrei voneinander lösbar. Die Herstellung dieser einstückigen Saugnippeleinheit erfolgt vorzugsweise im Zweikomponentenspritzgussverfahren, wobei zuerst der Stützkörper 2 und das Befestigungsteil 3 hergestellt werden und anschliessend der Stützkörper 2 umspritzt wird, um den Saugnippel 1 zu formen und um die Verbindung mit dem Befestigungsteil 3 zu schaffen.

Wie in den Figuren 1 und 2 erkennbar ist, weist das Befestigungsteil 3 einen Grundkörper 30 in Form eines vorzugsweise rotationssymmetrischen Gewinderings mit einem Innengewinde 31 auf. Mit diesem Innengewinde 31 lässt sich die Saugnippeleinheit auf einen Gewindehals einer Flasche oder einer Trinktasse, insbesondere einer Babyflasche, aufschrauben. Im oberen, dem Saugnippel zugewandten Teil weist das Befestigungsteil 3 einen nach innen versetzten und nach oben aufstehenden Aufnahmering 32 auf. Dieser dient einerseits mit seiner unteren Fläche als Anschlag für den Gewindehals der Flasche oder Trinktasse. Andererseits bildet er mit seiner seitlichen inneren Wand eine Kontaktfläche beim Anspritzen des Saugnippels 1.

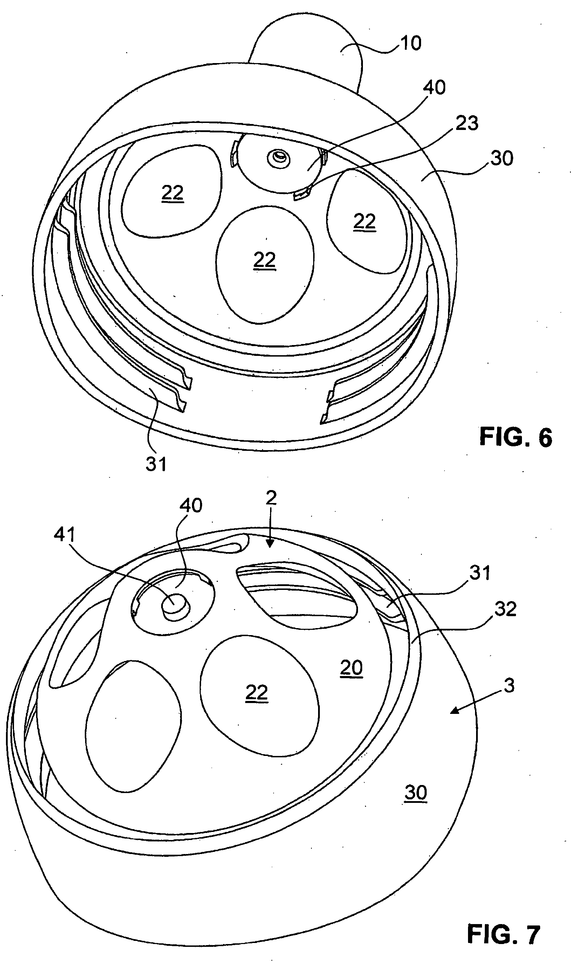

Der Stützkörper 2 weist einen im Wesentlichen domförmigen hohlen Grundkörper 20 auf. Der Grundkörper 20 weist über seinen Umfang gleichmässig verteilt angeordnete Ausnehmungen 22 auf. In diesem Beispiel sind es Durchgangslöcher 22. Diese sind in Figur 7 gut erkennbar. Die Ausnehmungen 22 weisen vorzugsweise eine ovale Form auf, wobei sich ihre Längsachse entlang der Mantellinie des Stützkörpers 2 von oben nach unten erstreckt. In diesem Beispiel sind die Ausnehmungen 22 alle auf gleicher Höhe angeordnet und gleich gross. Es sind vorzugsweise vier bis sieben, insbesondere fünf Ausnehmungen 22 vorhanden. Die Ausnehmungen 22 können jedoch auch auf unterschiedlicher Höhe angeordnet sein und/oder sie können verschiedene Grössen und/oder Formen aufweisen.

Im oberen Bereich des domförmigen Grundkörpers 20 ist eine zentrale Öffnung vorhanden, durch welche die Milch vom nicht dargestellten Getränkebehälter in den Saugkanal 14 des Saugnippels 1 gesaugt wird. Diese zentrale Öffnung weist einen relativ grossen Durchmesser auf. Vorzugsweise entspricht sie annähernd dem inneren Durchmesser des Saugkanals 14. Die zentrale Öffnung ist vorzugsweise von Befestigungsmitteln umgeben. Sie dienen zur Befestigung eines Rückschlagventils bzw. für Teile hiervon. In diesem Beispiel sind Einrasthaken 23 vorhanden, in welche eine Ventilplatte 4 eingerastet ist (siehe Figuren 1 und 6).

Die Ventilplatte 4 ist in diesem Ausführungsbeispiel rund und geschlossen ausgebildet, wie dies in den Figuren 1, 5 und 7 gut erkennbar ist. Sie weist einen planen Ring mit einer zentralen Erhöhung 41 auf, welche mit ihrer äusseren oberen Fläche eine Dichtfläche für eine nachfolgend beschriebene Ventilmembran 15 bildet. Vorzugsweise ist sie starr bzw. steif und/oder formstabil ausgebildet und besteht aus Polypropylen (PP), einem Polyamid oder einem anderen thermoplastischen Kunststoff.

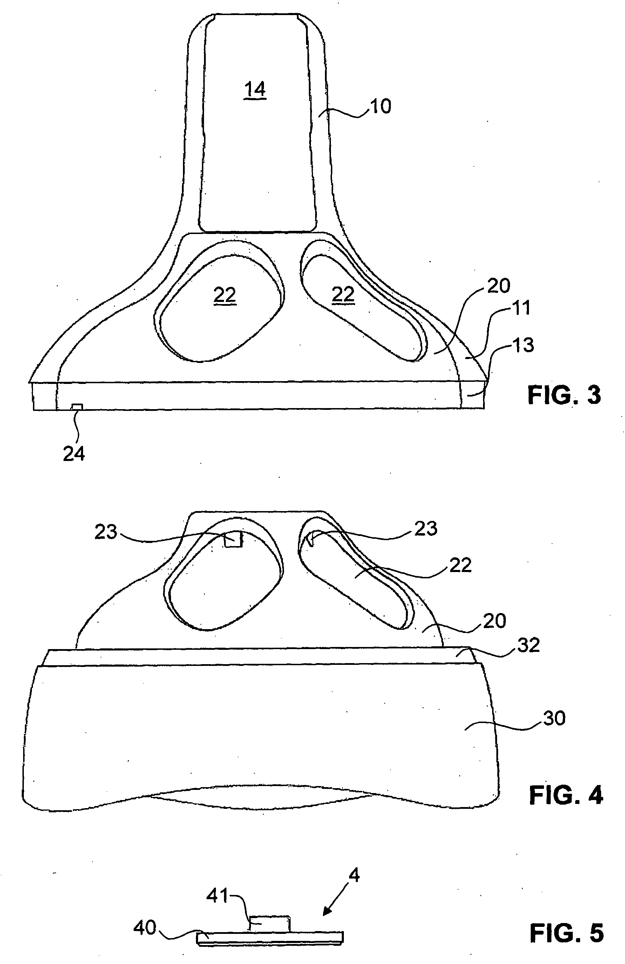

Ist die Ventilplatte 4 geschlossen ausgebildet, so wird sie beabstandet zur oberen Wand des Stützkörpers 2 eingerastet, damit Durchflusskanäle für den Milchfluss vom Innenraum des Stützkörpers 2 und somit vom Getränkebehälter zur zentralen Öffnung und somit zum Saugkanal 14 vorhanden sind. Ist die Ventilplatte 4 mit Löchern versehen, dienen diese als alternative oder zusätzliche Durchflusskanäle. Die Löcher können dabei auf der Platte verteilt oder peripher angeordnet sein. Es kann auch ein einziges Loch vorhanden sein. Der Stützkörper 2 weist in seinem unteren Bereich einen äusseren Durchmesser auf, welcher kleiner ist als der innere Durchmesser des Aufnahmerings 32 des Befestigungsteils 3. Der Stützkörper 2 ragt in den Aufnahmering 32 hinein. Der Zwischenraum ist vom Saugnippel 1 ausgefüllt, welcher sowohl mit dem Aufnahmering 32 wie auch mit dem unteren äusseren Umfang des Stützkörpers 2 fest verbunden ist, insbesondere ist er angespritzt. Er weist hierfür einen Verbindungsring 13 auf, wie er in den Figuren 1, 2 und 3 gut erkennbar ist. Der Verbindungsring 13 ist, wie in Figur 3 erkennbar ist, mit einer durchgehenden Öffnung 24 versehen. Diese dient als Belüftungsöffnung, um bei Saugpausen Luft von aussen über das Innengewinde 31 des Gewinderings 30 und die zentrale obere Öffnung des domförmigen Stützkörpers 2 in den Getränkebehälter einzubringen.

Der Verbindungsring 13 geht in einen domförmigen Grundkörper 11 über, welcher in einem Mundstück 10 endet. Das Mundstück 10 ist hohlzylinderförmig oder leicht kegelstumpfförmig ausgebildet, wobei es den Saugkanal 14 bildet. Das freie Ende des Mundstücks bildet die Saugöffnung 17, welche mit dem Saugkanal 14 verbunden ist. Der Saugkanal 14 weist vorzugsweise über seine gesamte Länge keine wesentlichen Einschnürungen auf und ist relativ breit ausgebildet. Typische Werte für den inneren Durchmesser des Saugkanals 14 sind 3 bis 12 mm, insbesondere 9.2 mm; für seine Länge 10 bis 30 mm, insbesondere 18 mm. Die Länge ist vorzugsweise so bemessen, dass ein Baby das Mundstück 10 vollständig in den Mund nehmen kann.

Die Saugöffnung 17 ist vorzugsweise wie der Querschnitt des Saugkanals 14 mindestens annähernd rund oder eckig ausgebildet. Sein Durchmesser beträgt vorzugsweise 2 bis 11 mm, insbesondere 6.8 mm. Er ist vorzugsweise nur unwesentlich kleiner als der Durchmesser des Saugkanals 14.

Der Saugnippel 1 verläuft mit seinem Grundkörper 11 entlang des Stützkörpers 2. Grundkörper 11 und Stützkörper 2 bilden gemeinsam eine Mundabstützung für das saugende Baby, wobei die Lippen oder der Mund des Babys auf dieser Mundabstützung aufliegen.

Der Grundkörper 11 ist vorzugsweise mit dem Stützkörper 2 fest verbunden, vorzugsweise ist er aufgespritzt. Er kann jedoch auch lose auf ihm aufliegen bzw. nur an einigen Stellen fest mit dem Stützkörper 2 verbunden sein.

Vorzugsweise überdeckt der Grundkörper 11 den Stützkörper 2 vollständig. Zumindest überdeckt er jedoch die Ausnehmungen 22. Der Grundkörper 11 kann im Wesentlichen eine gleichbleibende Dicke aufweisen. In diesem Beispiel ist er jedoch im Bereich der Ausnehmungen 22 dicker ausgebildet als an den geschlossenen Flanken des Stützkörpers 2, wobei diese verdickten Zonen 18 in die Ausnehmungen 22 hineinragen. Dies ist in den Figuren 1 und 2 gut erkennbar. Typische Dicken des Grundkörpers 11 im Bereich der geschlossenen Flanken betragen 0.5 bis 3 mm, insbesondere 0.9 mm und im Bereich der Ausnehmungen 22 0.7 bis 5 mm, insbesondere 1.4 mm.

Im Übergangsbereich vom Grundkörper 11 zum Mundstück 10, d.h. im untersten Bereich des Saugkanals 14, ist eine Ventilmembran 15 einstückig an die Innenwand des Saugnippels 1 angeformt. Sie weist eine zentrale Membranöffnung 16 mit einer umlaufenden spitzen Dichtlippe auf. Diese Dichtlippe liegt auf der bereits oben beschriebenen Dichtfläche 41 der Ventilplatte 4 auf. Vorzugsweise drückt dabei die Ventilplatte 4 die Membran 15 leicht nach oben, so dass diese vorgespannt ist. Ventilmembran 15 und Ventilplatte 4 bilden ein Rückschlagventil. Die Membranöffnung 16 bildet einen Durchflussbegrenzer für die Milch oder Flüssigkeit.

In Figur 1 ist das Rückschlagventil geschlossen. Dies entspricht dem Zustand, wenn die Saugnippeleinheit noch nicht in Gebrauch ist. Auch während den Saugpausen des Babys schliesst sich das Ventil, so dass der Milchfluss schnell unterbrochen werden kann und das Baby sich nicht verschluckt. Die Figur 2 stellt die Situation während des Saugens dar. Das Rückschlagventil ist offen und Milch kann in den Saugkanal fliessen. Üblicherweise ist im Gebrauch das weiche und flexible Mundstück im Mund des Babys verformt. Dies ist in den Figuren nicht dargestellt.

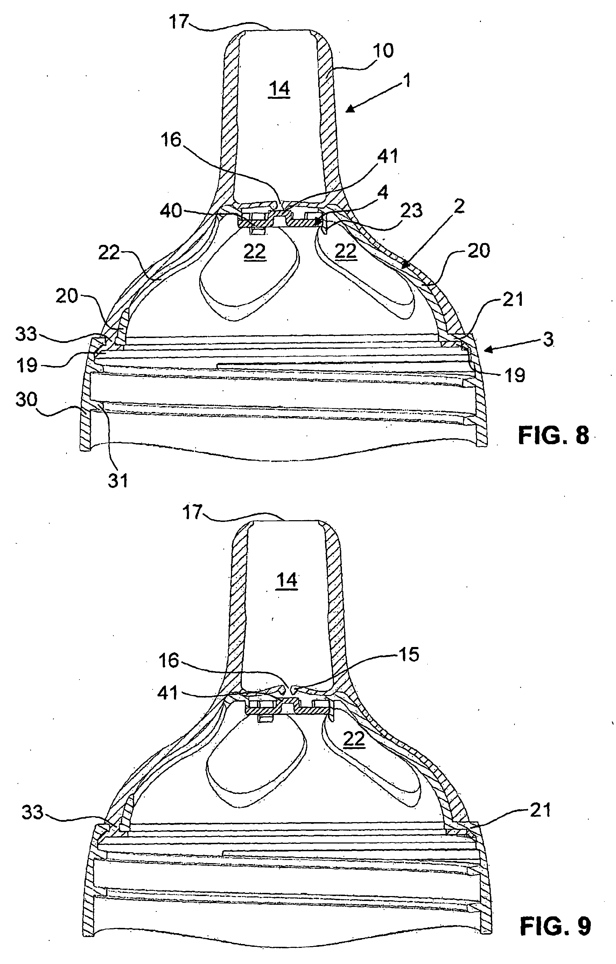

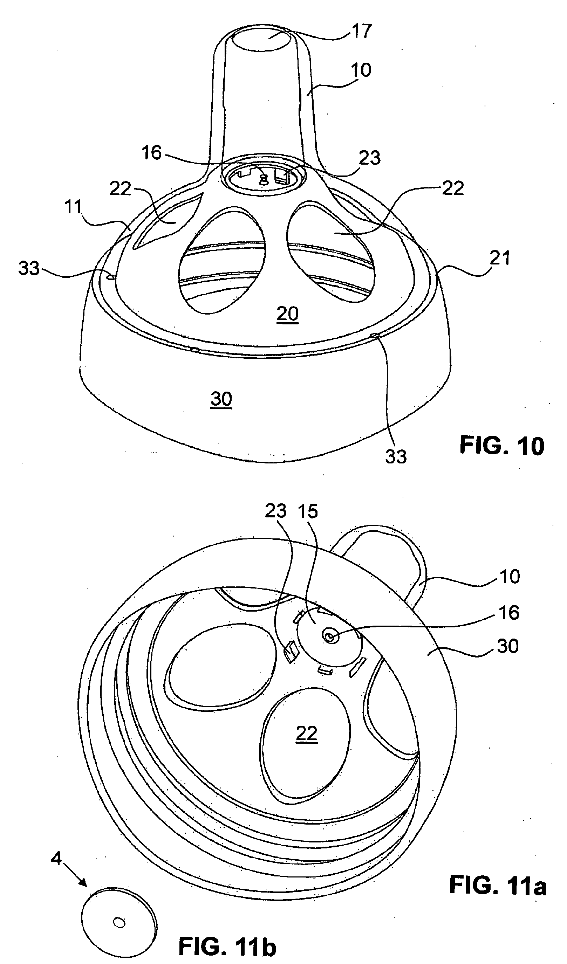

In den Figuren 8 bis 11 ist ein zweites Ausführungsbeispiel der erfindungsgemässen Saugnippeleinheit dargestellt. Die Saugnippeleinheit ist im Wesentlichen gleich aufgebaut wie im ersten Ausführungsbeispiel, so dass die in beiden Beispielen gleichen Teile hier nicht mehr beschrieben werden. Im Unterschied zum ersten Beispiel sind hier jedoch der Stützkörper 2 und das Befestigungsteil 3 unmittelbar und direkt miteinander verbunden. Sie sind einstückig gemeinsam hergestellt und bestehen aus einem einzigen Teil desselben Materials. Es eignet sich hierfür wiederum Polypropylen (PP), ein Polyamid oder ein anderer thermoplastischer Kunststoff. Stützkörper 2 und Befestigungsteil 3 sind wiederum starr bzw. steif und/oder formstabil ausgebildet.

Der feste Übergangsbereich zwischen Stützkörper 2 und Befestigungsteil 3 ist durch einen umlaufenden und in sich geschlossenen Übergangsflansch 21 gebildet, welcher vorzugsweise senkrecht zur Längsachse der zwei Teile verläuft. Dieser Übergangsflansch 21 bildet eine Fläche, welche vorzugsweise mit Ausnahme einiger einzelnen durchgehenden Öffnungen 33 vollständig geschlossen ist.

Auch hier ist der Stützkörper 2 vom Grundkörper 11 des Saugnippels 1 umgeben. Auch hier ist der Saugnippel 1 vorzugsweise an- oder aufgespritzt. Dabei durchdringt er die durchgehenden Öffnungen 33 und bildet auf der Innenseite des Gewinderings 30 einen in sich geschlossenen Ring. Der Ring hat eine dichtende Wirkung.

Die Ventilplatte 4 ist hier wiederum geschlossen dargestellt. Sie kann aber auch in diesem Beispiel durchgehende Löcher aufweisen.

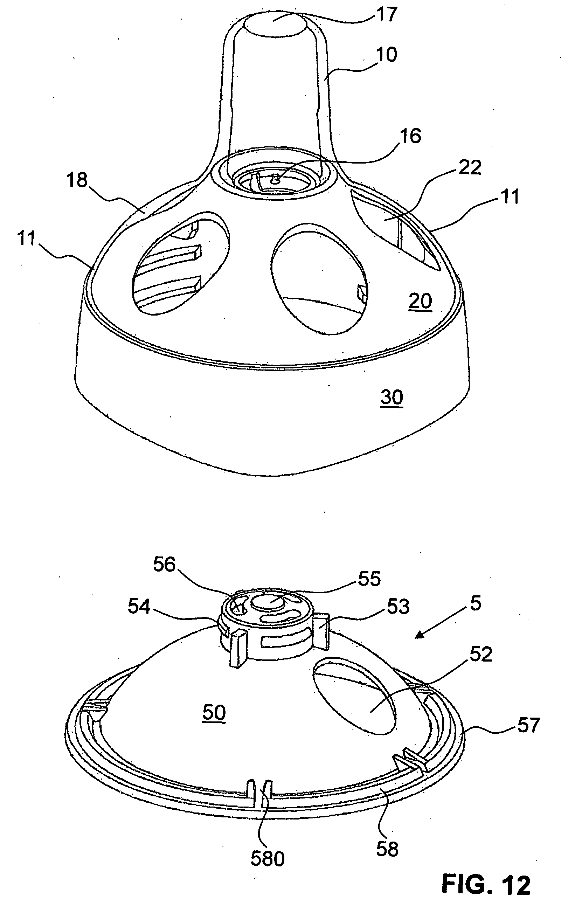

In den Figuren 12 bis 16 ist ein drittes Ausführungsbeispiel dargestellt. Es ist im Wesentlichen gleich ausgebildet wie das zweite Ausführungsbeispiel. Auch hier bilden Stützkörper 2 und Befestigungsteil 3 ein einziges Teil. Sie sind unmittelbar fest und direkt miteinander verbunden und einstückig ausgebildet.

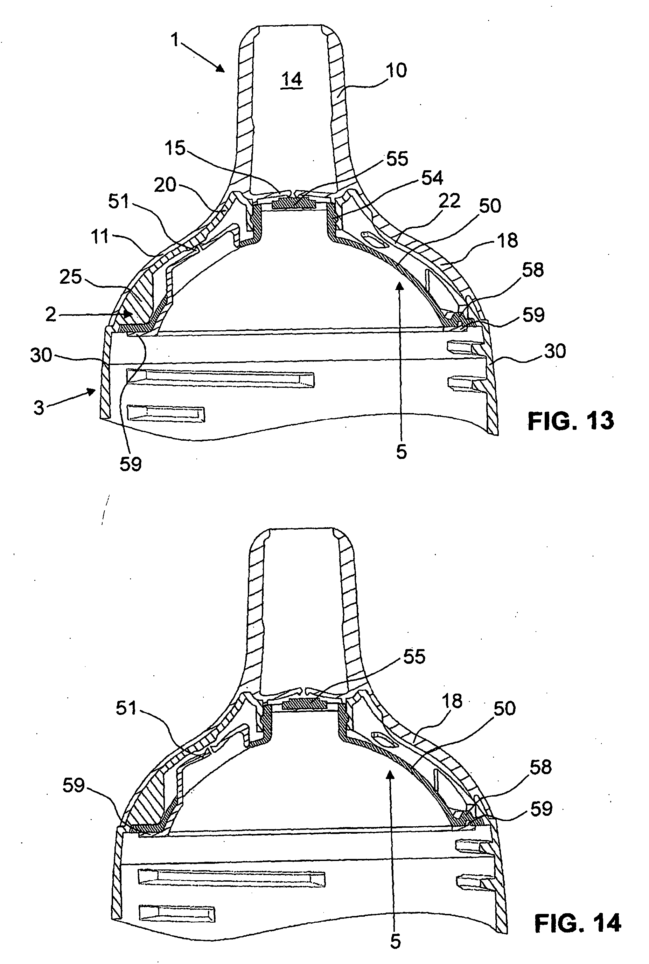

Im Gegensatz zur oben beschriebenen Ventilplatte 4 ist hier jedoch ein Einsatzelement 5 vorhanden. Dieses ist in Figur 12 dargestellt. Es weist einen domförmigen Grundkörper 50 auf, welcher beabstandet zur Innenseite des Stützkörpers 2 angeordnet ist (siehe Figuren 13 und 14).

Am oberen Ende des ersten Einsatzelements 5 sind radial vorstehende Nasen 53 zur Rotationssicherung und Einrastrippen 54 vorhanden, welche mit entsprechenden Einrastmitteln im oberen Bereich des Stützkörpers 2 zusammenwirken und das erste Einsatzelement 5 im Stützkörper 2 fixieren. Am unteren Ende des Grundkörpers 50 ist ein vollständig umlaufender Flansch 57 vorhanden, welcher mit vorstehenden umlaufenden Rippen 58 versehen ist. Diese Rippen 58 sind zur Rotationssicherung gegenüber dem Grundkörper 20 mit Unterbrechungen 580 ausgebildet.

Auf dem oberen Ende des Grundkörpers 50 ist eine plane Dichtfläche 55 für die Anlage der Ventilmembran 15 des Durchflussbegrenzer- und Rückschlagventils angeordnet. Diese Dichtfläche 55 ist von Milchdurchflussöffnungen 56 umgeben.

In der Flanke des Grundkörpers 50 ist eine seitliche Öffnung 52 vorhanden, welche vorzugsweise ebenfalls oval ausgebildet ist, wobei ihre Längsachse vorzugsweise von oben nach unten verläuft.

Dieses Einsatzelement 5 ist vorzugsweise starr bzw. steif ausgebildet und besteht vorzugsweise aus Polypropylen (PP), einem Polyamid oder einem anderen thermoplastischen Kunststoff.

Die seitliche Öffnung 52 ist von einer Belüftungsmembran 51 verschlossen, wie dies in den Figuren 13 und 14 dargestellt ist. In Figur 12 ist diese Membran 51 nicht dargestellt. Die Membran 51 ist am Grundkörper 50 befestigt, vorzugsweise ist sie angespritzt. Diese besteht vorzugsweise aus Silikon, einem Kunststoff auf Silikonbasis, Kautschuk, einem weichen thermoplastischen Elastomer (TPE) oder einem anderen thermoplastischen Kunststoff. Einsatzelement 5 und Membran 51 lassen sich wiederum beispielsweise im Zweikomponenten-Spritzgussverfahren herstellen.

Vorzugsweise ist die weiche Membran 51 so angespritzt, dass sich das weiche Material auf der Unterseite des Flansches 57 als umlaufender Ring 59 erstreckt. Der Ring 59 hat eine dichtende Wirkung.

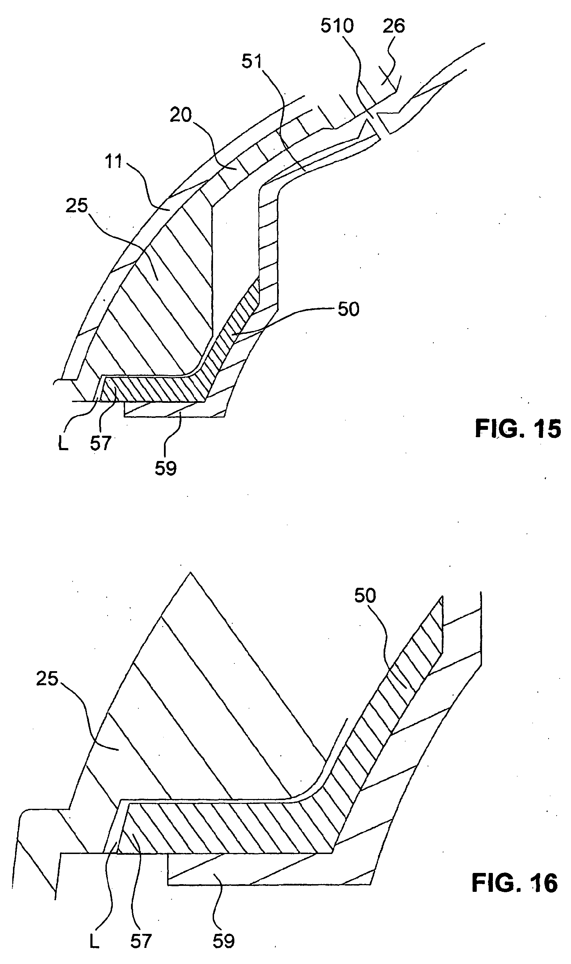

Die Membran 51 weist eine zentrale Belüftungsöffnung 510 auf, welche von einer spitzen Dichtlippe umgeben ist. Mit dieser Dichtlippe liegt die Membran 51 an einer Dichtfläche 26 des Stützkörpers 2 an. Dies ist in Figur 15 gut erkennbar. Die Belüftung erfolgt über das Innengewinde 31 des Gewinderings 30 und über einen Luftkanal L zwischen dem Flansch 57 und dem Grundkörper 20 bis hin zur Belüftungsmembran 51. Dies ist in den Figuren 15 und 16 gut erkennbar. Am Grundkörper 20 ist mindestens eine, hier mehrere radial nach innen vorstehende Nasen 25 angeformt, welche in die Unterbrechungen 580 eingreifen. Diese Ausbildung dient als Rotationssicherung und gleichzeitig zur Belüftung.

Dieser Einsatz lässt sich auch in der ersten Ausführungsform gemäss den Figuren 1 bis 7 anstelle der Ventilplatte 4 verwenden. Vorzugsweise wird dabei im ersten Beispiel die Form des Stützkörpers 2, insbesondere im Bereich der Verdickung 25 und der Dichtfläche 26 gemäss dem dritten Beispiel angepasst.

Die Membranen des Rückschlagventils und des Belüftungsventils werden in dieser Ausführungsform vorzugsweise erst vorgespannt, wenn die Saugnippeleinheit auf eine Flasche aufgeschraubt wird.

Die erfindungsgemässe Saugnippeleinheit erlaubt ein möglichst natürliches Saugen. Sie ist jedoch einfach aufgebaut und deshalb kostengünstig herstellbar, so dass sie für den Einmalgebrauch einsetzbar ist.

**BEZUGSZEICHENLISTE**

| | | | |
|---|---|---|---|
| 1 | Saugnippel | 4 | Ventilplatte |
| 10 | Mundstück | 40 | planer Ring |
| 11 | Grundkörper | 41 | Erhöhung |
| 13 | Verbindungsring | | |
| 14 | Saugkanal | 5 | erstes Einsatzelement |
| 15 | Ventilmembran | 50 | Grundkörper |
| 16 | Membranöffnung | 51 | Belüftungsmembran |
| 17 | Saugöffnung | 510 | Belüftungsöffnung |
| 18 | verdickte Zone | 52 | seitliche Öffnung |
| 19 | Ring | 53 | Nase zur Rotationssicherung |
| | | 54 | Einrastrippe |
| 2 | Stützkörper | 55 | Dichtfläche |
| 20 | Grundkörper | 56 | Milchdurchflussöffnungen |
| 21 | Übergangsflansch | 57 | Flansch |
| 22 | Ausnehmung | 58 | Rippe |
| 23 | Einrasthaken | 580 | Unterbrechung |
| 24 | Belüftungsöffnung | 59 | Ring |
| 25 | Verdickung | | |
| 26 | Dichtfläche | 6 | zweites Einsatzelement |
| | | 60 | Grundkörper |
| 3 | Befestigungsteil | 61 | Befestigungsflansch |
| 30 | Grundkörper | 62 | Ventilmembran |
| 31 | Innengewinde | 63 | Membranöffnung |
| 32 | Aufnahmering | | |
| 33 | durchgehende Öffnungen | L | Luftkanal |

## Patentansprüche

1. Saugnippeleinheit mit einem Saugnippel (1), einem Stützkörper (2) und einem Befestigungsteil (3), wobei der Saugnippel (1) einen Grundkörper (11) aufweist und auf dem Stützkörper (2) angeordnet ist, wobei der Saugnippel (1) den Stützkörper (2) mindestens teilweise umgibt und wobei der Grundkörper (11) und der Stützkörper (2) gemeinsam eine Mundabstützung bilden, wobei der Stützkörper (2) domförmig ausgebildet ist und wobei die Saugnippeleinheit mittels des Befestigungsteils (3) auf einem Getränkebehälter befestigbar ist, wobei der Stützkörper (2) und das Befestigungsteil (3) mittelbar oder unmittelbar miteinander verbunden sind, wobei sie nicht zerstörungsfrei voneinander lösbar sind, und wobei der Stützkörper (2) Ausnehmungen (22) aufweist, welche vom Saugnippel (1) überdeckt sind, wobei der Saugnippel (1) auf den Stützkörper (2) aufgespritzt ist, wobei der Saugnippel (1) über die Ausnehmungen (22) aufgespritzt ist und diese überdeckt, **dadurch gekennzeichnet, dass** der Saugnippel (1) ein Mundstück (10) aufweist, welches den Stützkörper (2) überragt.

2. Saugnippeleinheit nach Anspruch 1, wobei das Befestigungsteil (3) und/oder der Stützkörper (2) steif und/oder formstabil ausgebildet ist.

3. Saugnippeleinheit nach einem der Ansprüche 1 oder 2, wobei die Ausnehmungen (22) des Stützkörpers (2) Vertiefungen oder durchgehende Löcher sind.

4. Saugnippeleinheit nach einem der Ansprüche 1 bis 3, wobei die Ausnehmungen (22) gleichmässig verteilt über die Oberfläche des Stützkörpers (2) angeordnet sind.

5. Saugnippeleinheit nach einem der Ansprüche 1 bis 4, wobei vier bis sieben, vorzugsweise genau fünf derartiger Ausnehmungen (22) vorhanden sind.

6. Saugnippeleinheit nach einem der Ansprüche 1 bis 5, wobei der Saugnippel (1) im Bereich der Ausnehmungen (22) verdickt ausgebildet ist.

7. Saugnippeleinheit nach einem der Ansprüche 1 bis 6, wobei der Saugnippel (1) den Stützkörper (2) und das Befestigungsteil (3) nicht zerstörungsfrei lösbar miteinander verbindet.

8. Saugnippeleinheit nach einem der Ansprüche 1 bis 6, wobei der Stützkörper (2) und das Befestigungsteil (3) gemeinsam einstückig ausgebildet sind.

9. Saugnippeleinheit nach einem der Ansprüche 1 bis 8, wobei der Saugnippel (1), der Stützkörper (2) und das Befestigungsteil (3) gemeinsam in einem Zweikomponenten-Spritzgussverfahren hergestellt sind und wobei der Saugnippel (1) eine geringere Shore A Härte aufweist als der Stützkörper (2) und das Befestigungsteil (3).

10. Saugnippeleinheit nach einem der Ansprüche 1 bis 9, wobei im Saugnippel (1) eine Ventilmembran (15) angeformt ist und im Stützkörper (2) ein zugehöriger Ventilsitz (41, 55) angeordnet ist.

11. Saugnippeleinheit nach Anspruch 10, wobei der Ventilsitz (41, 55) in Form eines Einsatzelements (4, 5) im Stützkörper (2) angeordnet ist.

12. Saugnippeleinheit nach einem der Ansprüche 1 bis 11, wobei im Stützkörper (2) ein formstabiles Einsatzelement (5) mit mindestens einer Durchgangsöffnung (56) angeordnet ist, wobei die Durchgangsöffnung (56) eine Verbindung zwischen einem Innenraum des Getränkebehälters zur Saugöffnung (17) bildet.

13. Saugnippeleinheit nach Anspruch 12, wobei im Einsatzelement (5) eine Membran (51) eines Belüftungsventils angeordnet ist, welches mit einer Dichtfläche (26) des Stützkörpers (2) zusammenwirkt.

14. Saugnippeleinheit nach Anspruch 10, wobei der Ventilsitz (41) ein Einsatzelement in Form einer Platte (4) ist, welche im Stützkörper (2) gehalten ist.

15. Saugnippeleinheit nach einem der Ansprüche 1 bis 14, wobei das Befestigungsteil (3) im Wesentlichen ein Gewindering (30) ist.

## Claims

1. Teat unit with a teat (1), a support body (2) and a securing part (3), wherein the teat (1) comprises a main body (11) and is arranged on the support body (2), wherein the teat (1) surrounds the support body (2) at least partially and wherein the main body (11) and the support body (2) together form a mouth support, wherein the support body (2) is dome-shaped and wherein the teat unit can be secured on a drinking vessel by means of the securing part (3), wherein the support body (2) and the securing part (3) are fixedly connected to each other indirectly or directly, and they cannot be detached from each other without being destroyed, and wherein the support body (2) has recesses (22), which are covered by the teat (1), wherein teat (1) is injected onto the support body (2), wherein the teat (1) is injected on over the recesses (22) and wherein the teat (1) covers the recesses (22), **characterized in that** the teat (1) comprises a mouthpiece (10) which protrudes over the support body (2).

2. Teat unit according to Claim 1, wherein the securing part (3) and/or the support body (2) is stiff and/or dimensionally stable.

3. Teat unit according to one of Claims 1 to 2, wherein the recesses (22) of the support body (2) are depressions or through-holes.

4. Teat unit according to one of Claims 1 to 3, wherein the recesses (22) are uniformly distributed across the surface of the support body (2).

5. Teat unit according to one of Claims 1 to 4, wherein four to seven such recesses (22) are present, preferably exactly five.

6. Teat unit according to one of Claims 1 to 5, wherein the teat (1) is made thicker in the area of the recesses (22).

7. Teat unit according to one of Claims 1 to 6, wherein the teat (1) connects the support body (2) and the securing part (3) to each other such that they cannot be detached without being destroyed.

8. Teat unit according to one of Claims 1 to 7, wherein the support body (2) and the securing part (3) are formed integrally in one piece.

9. Teat unit according to one of Claims 1 to 8, wherein the teat (1), the support body (2) and the securing part (3) are produced together in a two-component injection moulding method, and wherein the teat (1) has a lower Shore A hardness than the support body (2) and the securing part (3).

10. Teat unit according to one of Claims 1 to 9, wherein a valve diaphragm (15) is formed integrally in the teat (1), and an associated valve seat (41, 55) is arranged in the support body (2).

11. Teat unit according to Claim 11, wherein the valve seat (41, 55) is arranged in the form of an insert element (4, 5) in the support body (2).

12. Teat unit according to one of Claims 1 to 11, wherein a dimensionally stable insert element (5) with at least one through-opening (56) is arranged in the support body (2), and wherein the through-opening (56) forms a connection between an interior of the drinking vessel and the suction opening (17).

13. Teat unit according to Claim 12, wherein a diaphragm (51) of a venting valve is arranged in the insert element (5) and engages with a sealing surface (26) of the support body (2).

14. Teat unit according to Claim 10, wherein the valve seat (41) is an insert element in the form of a plate (4), which is held in the support body (2).

15. Teat unit according to one of Claims 1 to 14, wherein the securing part (3) is substantially a threaded ring (30).

## Revendications

1. Unité à tétine comprenant une tétine (1), un corps de support (2) et une partie de fixation (3), la tétine (1) présentant un corps de base (11) et étant disposée sur le corps de support (2), la tétine (1) entourant au moins en partie le corps de support (2), le corps de base (11) et le corps de support (2) formant ensemble un appui pour la bouche, le corps de support (2) étant réalisé en forme de dôme et l'unité à tétine pouvant être fixée au moyen de la partie de fixation (3) sur un récipient pour boissons, le corps de support (2) et la partie de fixation (3) étant connectés l'un à l'autre de manière directe ou indirecte et ne pouvant pas être détachés l'un de l'autre sans destruction, et le corps de support (2) présentant des évidements (22) qui sont recouverts par la tétine (1), la tétine (1) étant surmoulée sur le corps de support (2), la tétine (1) étant surmoulée par-dessus les évidements (22) et recouvrant ceux-ci, **caractérisée en ce que** la tétine (1) présente une embouchure (10) qui dépasse du corps de support (2).

2. Unité à tétine selon la revendication 1, dans laquelle la partie de fixation (3) et/ou le corps de support (2) sont réalisés sous forme rigide et/ou avec une forme stable.

3. Unité à tétine selon l'une quelconque des revendications 1 ou 2, dans laquelle les évidements (22) du corps de support (2) sont des renfoncements ou des trous traversants.

4. Unité à tétine selon l'une quelconque des revendications 1 à 3, dans laquelle les évidements (22) sont disposés de manière répartie uniformément sur la surface du corps de support (2).

5. Unité à tétine selon l'une quelconque des revendications 1 à 4, dans laquelle quatre à sept, de préférence exactement cinq de ces évidements (22) sont prévus.

6. Unité à tétine selon l'une quelconque des revendications 1 à 5, dans laquelle la tétine (1) est réalisée sous forme épaissie dans la région des évidements (22).

7. Unité à tétine selon l'une quelconque des revendications 1 à 6, dans laquelle la tétine (1) relie l'un à l'autre le corps de support (2) et la partie de fixation (3) de manière à ne pas pouvoir les détacher sans destruction.

8. Unité à tétine selon l'une quelconque des revendications 1 à 6, dans laquelle le corps de support (2) et la partie de fixation (3) sont réalisés ensemble d'une seule pièce.

9. Unité à tétine selon l'une quelconque des revendications 1 à 8, dans laquelle la tétine (1), le corps de support (2) et la partie de fixation (3) sont fabriqués ensemble dans un procédé de moulage par injection à deux composants et dans laquelle la tétine (1) présente une dureté Shore A plus faible que celle du corps de support (2) et de la partie de fixation (3).

10. Unité à tétine selon l'une quelconque des revendications 1 à 9, dans laquelle, dans la tétine (1), est façonnée une membrane de soupape (15) et, dans le corps de support (2), est disposé un siège de soupape associé (41, 55).

11. Unité à tétine selon la revendication 10, dans laquelle le siège de soupape (41, 55) est disposé sous la forme d'un élément d'insertion (4, 5) dans le corps de support (2).

12. Unité à tétine selon l'une quelconque des revendications 1 à 11, dans laquelle, dans le corps de support (2) est disposé un élément d'insertion de forme stable (5) avec au moins une ouverture traversante (56), l'ouverture traversante (56) formant une connexion entre un espace interne du récipient pour boissons et l'ouverture d'aspiration (17).

13. Unité à tétine selon la revendication 12, dans laquelle, dans l'élément d'insertion (5), est disposée une membrane (51) d'une soupape de ventilation, laquelle coopère avec une surface d'étanchéité (26) du corps de support (2).

14. Unité à tétine selon la revendication 10, dans laquelle le siège de soupape (41) est un élément d'insertion sous la forme d'une plaque (4) qui est retenue dans le corps de support (2).

15. Unité à tétine selon l'une quelconque des revendications 1 à 14, dans laquelle la partie de fixation (3) est essentiellement une bague filetée (30).
